(19) Europäisches Patentamt / European Patent Office / Office européen des brevets

(11) **EP 2 787 356 B1**

(12) **EUROPEAN PATENT SPECIFICATION**

(45) Date of publication and mention
of the grant of the patent:
**09.10.2019 Bulletin 2019/41**

(51) Int Cl.:
**G01R 19/00** (2006.01)    **G06F 17/50** (2006.01)

(21) Application number: **14162200.1**

(22) Date of filing: **28.03.2014**

(54) **Systems and methods for identifying weak buses in an electrical power system**

Systeme und Verfahren zum Identifizieren schwacher Busse in einem elektrischen Stromversorgungssystem

Systèmes et procédés pour identifier des bus faibles dans un système d'alimentation électrique

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **01.04.2013 IN CH14662013**
**10.05.2013 IN CH20912013**

(43) Date of publication of application:
**08.10.2014 Bulletin 2014/41**

(73) Proprietor: **General Electric Company**
**Schenectady, NY 12345 (US)**

(72) Inventors:
 • **Kelapure, Shekhar Madhukarrao**
   **560066 Bangalore, Karnataka (IN)**
 • **Kolwalkar, Amol Rajaram**
   **560066 Banagalore, Karnataka (IN)**
 • **Gadiraju, Kasi Viswandadha Raju**
   **560066 Banagalore, Karnataka (IN)**
 • **Kanabar, Mitalkumar Gulabrai**
   **Markham, Ontario L6C 0M1 (CA)**
 • **Voloh, Ilia**
   **Markham, Ontario L6C 0M1 (CA)**

(74) Representative: **Brevalex**
**95, rue d'Amsterdam**
**75378 Paris Cedex 8 (FR)**

(56) References cited:
**US-A1- 2009 027 067    US-A1- 2013 073 108**

 • **RANJANA SODHI ET AL: "A Simple Scheme for Wide Area Detection of Impending Voltage Instability", IEEE TRANSACTIONS ON SMART GRID, IEEE, USA, vol. 3, no. 2, 1 June 2012 (2012-06-01), pages 818-827, XP011445367, ISSN: 1949-3053, DOI: 10.1109/TSG.2011.2180936**

## Description

### BACKGROUND

Stability is one of the key issues in modern electrical power systems. As the grid becomes more complex, voltage stability in a grid network becomes even more critical for utilities to provide reliable service. Electrical power systems are monitored and controlled to provide continuous and reliable service; however, system outages may still occur and are often associated with voltage instabilities. Since power system stability is directly linked to networks, loading conditions, changes in the system, and time, it is imperative to sense or predict instability as early as possible. Any error in computing or measuring voltage stability may result in delay in the detection of the voltage instability. Any delay in sensing and engaging counter-measures may further deteriorate the system conditions and can lead to unwanted and uncontrollable collapses, or costlier counter measures.

The approaches for determining voltage instability may be broadly divided into three categories; first that may require some wide area network information, such as topology, reactive power limits of generators, line impedances, and so on; second that may use local network information, such as power flows over a particular line or voltages and currents at the end buses; and third that may not require any system information and instead relies only on local measurements, such as voltage, current, and rate of change of these quantities.

The majority of the existing approaches use model-based solutions rather than measurement-based approaches. One commonly used model-based approach uses power flow or continuation power flow to track Power Voltage (PV) curve for voltage instability assessment. One measurement-based approach used in the industry is Thevenin's approach that uses voltage and current phasor values to evaluate voltage instability. Some existing approaches attempt to identify weak locations such as weak buses in the system and can be used further to engage counter measures, before the system reaches the voltage instability point.

US 2009/0027067 describes a method of identifying voltage instability in a power system via identification of a weakest line and bus that contribute to the collapse of the system is provided. The method includes periodically calculating an extended line stability index for the transmission lines monitored in the power system; and using the extended line stability index to determine the distance of an operation state in the power system from a collapse point of the system caused by voltage instability.

The challenge with these existing approaches is that they are either inaccurate or computationally cumbersome for real-time assessment of voltage instability. Moreover, the existing measurement-based approach needs various parameters such as voltage and current phasor values, in addition to other parameters such as connectivity, network parameters, information about the loading condition, changes in controls, outages, and so on for assessing the voltage instability. Unavailability of any of these parameters or error in computing them may result in inaccurate detection of voltage instability, which may lead to service disruption and therefore loss for both customers and utilities.

### BRIEF DESCRIPTION

The present invention resides in a method and a system for determining one or more weak buses in an electrical power system as defined in the appended claims.

### DRAWINGS

These and other features and aspects of embodiments of the present invention will become better understood when the following detailed description is read with reference to the accompanying drawings in which like characters represent like parts throughout the drawings, wherein:

Fig. 1 is an electrical power system including a bus connected to other buses via transmission or distribution links.

Fig. 2 depicts a control center system that communicates with one or more monitoring modules for determining one or more weak buses and voltage instability in the electrical power system, in accordance with one embodiment.

Fig. 3 depicts a two-bus electrical system including a generator and a load, and equivalent phasor diagram of the two-bus electrical system.

Fig. 4 depicts a communication architecture including two control center systems communicating with a centralized control center, in accordance with one embodiment.

Fig. 5 depicts a communication architecture including the two control center systems communicating with each other directly, in accordance with another embodiment.

Fig. 6 is a flowchart depicting a method for identification of the weak buses from a plurality of buses and determination of voltage instability in the electrical power system.

### DETAILED DESCRIPTION

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean one, some, or all of the listed items. The use of terms such as "including," "comprising," or "having" and variations thereof herein are meant to encompass the items listed thereafter and equivalents thereof as well as additional items. The terms "module," "processor," "storage unit," "network interface," and "input/output (I/O) interface" may include either a single component or a plurality of components, which are either active, or passive, or both, and are connected or otherwise coupled together to provide the described function. Additionally, for purposes of explanation, specific numbers, components, and configurations are set forth in order to provide a thorough understanding of various embodiments of the invention.

Various embodiments of the present invention are directed to system and method for determining weak locations such as one or more weak buses (hereinafter referred to as weak buses) including a single weakest bus or multiple weak buses in an electrical power system in real-time. Embodiments of the system and method disclosed herein may ensure that determining the weak buses may be further used to implement appropriate countermeasures to reduce or eliminate any damage caused due to delay in the detection of voltage instability.

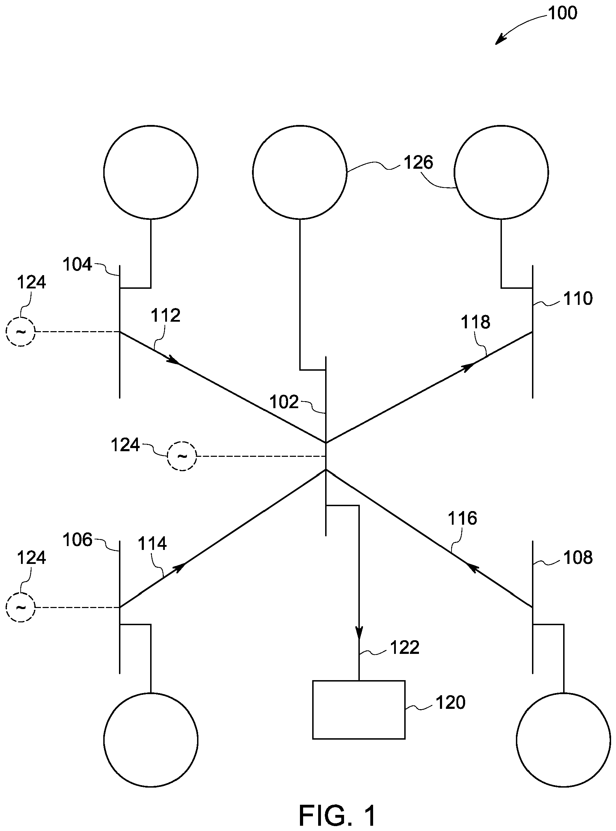

Fig. 1 is an electrical power system 100 (hereinafter referred to as "system 100") including a bus 102 connected to one or more buses 104, 106, 108 and 110 via transmission or distribution links (hereinafter referred to as "links") 112, 114, 116 and 118, respectively. The system 100 may be a synchronized alternating current (AC) system, in accordance with some embodiments. The system 100 may further include an electrical load 120 connected to the bus 102 via another link 122. The system 100 may further include an electrical power source(s) such as one or more generators 124 that may generate electrical power for the rest of the system 100. Although Fig. 1 illustrates three generators; however, any number of generators may be deployed in the system 100 without deviating from the scope of the invention. Similarly, any number of electrical loads, buses or links may be implemented in the system 100, in accordance with some embodiments of the invention.

In some embodiments, the system 100 may further include one or more monitoring modules 126 (hereinafter referred to as "monitoring modules 126") that may be configured to determine phasor values associated with a plurality of buses ('m' buses, where m is the number of buses). As shown in Fig. 1, in some embodiments, the plurality of buses (or 'm' buses) may include some or all of the bus 102 and the buses 104, 106, 108 and 110. In one exemplary embodiment, the monitoring modules 126 may be phasor measurement units (PMUs) or relays embedding functionalities of PMUs. In another exemplary embodiment, some or all the phasor values may be obtained from, but not limited to, an energy management system (EMS), a manual input from a utility operator, historical data of the phasor values, or a tool for computing the phasor values, or any combination thereof. In some embodiments, the phasor values may be determined or obtained in real-time. In one embodiment, real-time may refer to occurrence of event instantaneously, for example, in the order of milliseconds or microseconds. In another embodiment, real-time may be near real-time having a predetermined tolerance (for example, two to five percent) with respect to instantaneous real-time. In one exemplary embodiment where data is received near real-time, a utility operator or a protection engineer viewing the data may not perceive any delay during display of data.

In one exemplary embodiment, the phasor value may include voltage magnitude ($V_m$) determined at an 'mth' bus, and phase angle ($\delta_m$) determined at the same 'mth' bus. The term "voltage magnitude ($V_m$)" at the 'mth' bus herein refers to voltage value at the 'mth' bus expressed in per unit (pu). Until otherwise mentioned, various electrical parameters described herein for computation of VSIs are expressed in pu. The phase angle is expressed herein in degrees or radians. In one embodiment, when the phase angle is measured by the monitoring modules 126, the phasor angle may be measured with respect to a global time reference such as global positioning system (GPS) clock. For example, voltage magnitude and phase angle determined at a bus 'B1' (one of the 'm' buses) are hereinafter interchangeably referred to as $V_1$ and $\delta_1$, respectively. In some embodiments, the monitoring modules 126 may be configured to measure all phasor values at the plurality of buses at a same time instance, which may be absolute time or relative time, since these values may differ when measured at different time instances due to, for example, changes in system topology such as addition or removal of reactive power support in the system 100. In another embodiment, some or all the phasor values may be estimated from a state estimator in a control center system such as EMS.

In an alternate embodiment, the phasor values may include change in voltage magnitude ($\Delta V_m$) corresponding to the respective 'mth' bus, and change of phase angle ($\Delta\delta_m$) corresponding to the same 'mth' bus calculated over a time period, where the change is determined by measuring phasor values at the same bus and at different time instances, and then calculating difference between these measured phasor values. In one exemplary embodiment, the monitoring modules 126 may be configured to measure voltage magnitude ($V_{mT1}$) and phase angle ($\delta_{mT1}$) at the 'mth' bus at time instance 'T1,' and may be configured to further measure voltage magnitude ($V_{mT2}$) and phase angle ($\delta_{mT2}$) at the same 'mth' bus at another time instance 'T2.' The change of these measured parameters ($\Delta\delta_m$ and $\Delta V_m$)

at the 'mth' bus may be calculated as the difference between the voltage magnitudes ('$V_{mT1}$' - '$V_{mT2}$') or phase angles ('$\delta_{mT1}$' - '$\delta_{mT1}$') at the same 'mth' bus measured at different time instances 'T1' and 'T2.' In some exemplary embodiments, $\Delta\delta_m$ may be determined by:

$$\Delta\delta_m = \delta_{mT1} - \delta_{mT2} \quad (eq. \ 1)$$

In yet another embodiment, the phasor value may include a rate of change of voltage magnitude corresponding to the respective 'mth' bus, and a rate of change of phase angle corresponding to the same 'mth' bus.

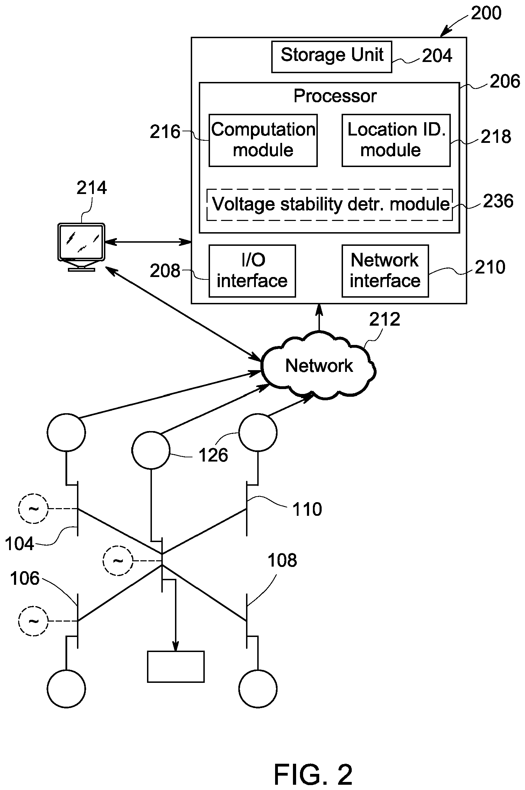

Fig. 2 depicts a control center system 200 (hereinafter referred to as system 200) that communicates with the monitoring modules 126 for determining weak buses and voltage instability in an electrical power system (such as system 100), in accordance with one embodiment. In one exemplary embodiment, the system 200 may be a phasor data concentrator (PDC) or supervisory control and data acquisition/energy management system (SCADA/EMS) that may be configured to control and monitor the monitoring modules 126 and may access the phasor values determined by the monitoring modules 126. In one such embodiment, when the system 200 is a PDC, the system 200 may be further connected to a wide area monitoring system such as SCADA/EMS (not shown in Fig. 2).

As illustrated in Fig. 2, the system 200 may include a storage unit 204, a processor 206, an I/O interface 208, and a network interface 210. The I/O interface 208 may include one or more human I/O devices, which enable a utility operator or a protection engineer to communicate with the monitoring modules 126 or other communication devices via a communication network 212, in accordance with one embodiment. In an alternate embodiment, the utility operator or the protection engineer may communicate with the monitoring modules 126 or other communication devices from a local or remote workstation 214 via the communication network 212. The communication network 212 may be, for example, a known wired or wireless network using which the system 200 may control and monitor the monitoring modules 126.

In certain embodiments, the processor 206 may store the received, processed, and transmitted data to, or may read from, the storage unit 204, such as a hard disk drive, a floppy disk drive, a compact disk-read/write (CD-R/W) drive, a digital versatile disc (DVD) drive, a flash drive, or a solid-state storage device. The processor 206 may include, for example, one or more application-specific processors, graphical processing units, digital signal processors, microcomputers, microcontrollers, application specific integrated circuits (ASICs), field programmable gate arrays (FPGAs), or other suitable devices in communication with one or more components of the system 200.

The processor 206 may include a computation module 216 for analyzing data that is received at and transmitted from the I/O interface 208 or the network interface 210 in the system 200. In some embodiments, the computation module 216 may be configured to compute voltage stability indices (VSIs) of 'm' buses. Similar to Fig. 1, as shown in Fig. 2, in some embodiments, the 'm' buses may include some or all of the bus 102 and the buses 104, 106, 108 and 110.

In the power system computations, phase angle at a bus should be with reference to another phase angle (for example, phase angle of another bus) in the electrical power system. Since the phase angle ($\delta_m$), as described above, is measured with respect to a global time reference such as GPS clock, which is not a component of an electrical power system, a reference angle such as a phase angle of a bus (hereinafter referred to as 'reference phase angle') in the system may be used. In some embodiments, VSIs may be computed for all 'm' buses with this reference phase angle as the common reference. In some other embodiments, VSIs for some 'm' buses may be computed with this reference phase angle as the common reference with the VSIs for the rest of the buses being computed using a different reference phase angle.

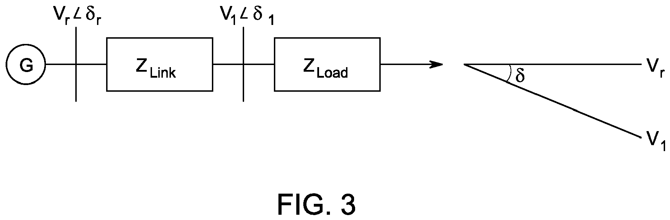

The determination of reference phase angle and computation of VSIs at the plurality of buses is described herein in conjunction with Fig. 3. Fig. 3 depicts a two-bus electrical system including a generator 'G' and a load L (having load impedance '$Z_{Load}$'), and equivalent phasor diagram of the two-bus electrical system. In some embodiments, the computation module 216 may be configured to compute VSI at a bus 'B1' ($VSI_1$) as a function of voltage magnitude at the bus 'B1' ("$V_1$"), and a difference between a phase angle '$\delta_1$' at a bus 'B1' and a reference phase angle '$\delta_r$' at a reference bus 'Br' in the system (such as 100). Referring to Fig. 3, a phasor angle between voltage magnitude at the reference bus Br ('$V_r$') and $V_m$ (for example, $V_1$ as shown in Fig. 3) is represented by '$\delta$,' where $\delta = \delta_r - \delta_1$. In one embodiment, where a single control center system is implemented, for example as shown in Fig. 2, any one of the monitoring modules 126 may select one of the 'm' buses as the reference bus 'Br.' In such an embodiment, a phase angle determined at that 'mth' bus may be defined as the reference phase angle. In one embodiment, a maximum value selected from the phase angles ($\delta_m$), associated with 'm' buses, may be defined as the reference phase angle. This maximum value is hereinafter referred to as maximum phase angle ($\delta_{max}$). In an alternate embodiment, a minimum value selected from the phase angles ($\delta_m$), associated with the 'm' buses, may be defined as the reference phase angle. This minimum value is hereinafter referred to as minimum phase angle ($\delta_{min}$).

In one exemplary embodiment, the following equation may be used to determine VSI at any 'mth' bus (for example, bus 'B1,' bus 'B2,' and so on) in the system (such as 100):

$$VSI_m = V_m * \cos(\delta_m - \delta_r) \quad (eq. \ 2)$$

where,

$VSI_m$ is a VSI value computed at 'mth' bus,

$V_m$ is a voltage magnitude at 'mth' bus,

$\delta_m$ is a phase angle at 'mth' bus

In some embodiments, the computation module 216 may be configured to determine the reference phase angle in the same way as phasor values are determined, as explained above in conjunction with Fig. 1. In one exemplary embodiment, the reference phase angle may be one of the phase angles obtained from the monitoring modules 126. In an alternate embodiment, when the monitoring modules 126 are unable to obtain the reference phase angle, the reference phase angle may be obtained from, but not limited to, an EMS, a manual input from a utility operator, historical data of the phasor values, or a tool for computing the phasor values, or any combination thereof. In some embodiments, the reference phase angle may be determined or obtained in real-time since the reference phase angle of a bus in the system 100 may change over time due to, for example, change in load or change in network topology.

In some embodiments, multiple phasor values may be obtained for each bus in the system 100 and these phasor values may be processed by the processor 206 prior to the computation of VSIs at the 'm' buses. In one exemplary embodiment, sixty samples of phasor values (such as, voltage magnitudes and phase angles, or their change or rate of change) may be measured or obtained every second for each bus in the system 100. In such an embodiment, few samples (for example, 2-10 samples) for a bus may have phasor values that may be significantly different from other samples for the same bus. The significant difference in few samples may be due to changes in the power quantities in the system 100 or due to some error in the measurement. In some embodiments, in order to eliminate any inaccuracy in the computation of VSIs, an average of the samples of phasor values, measured or obtained over a time period (for example, one second) for each bus in the system 100, may be calculated. Such averages may then be used to compute VSIs at the 'm' buses in the system 100. In some alternate embodiments, any other technique may be used to compensate for inaccuracy in the computation of VSIs, which may result in inaccuracy in the identification of weak buses in the system and false alarming of voltage instability in the system 100. In one example, an integration of the samples measured or obtained over a time period (for example, every second) for each bus in the system 100 may be used for computation of VSIs. In another example, an existing filtering device may be used to remove few samples (for example, 2-10 samples from a total of 60 samples) that are significantly different from other samples being measured or estimated for the same bus over a certain time period.

Referring to Fig. 2, once the phasor values are measured or estimated, the reference phase angle is determined, and the VSIs at the 'm' buses are computed, a location identification module 218 in the processor may be configured to analyze VSIs computed by the computation module 216. In one exemplary embodiment, the location identification module 218 may be configured to identify weak buses from the 'm' buses based on the computed VSIs. In one embodiment, the location identification module 218 may be configured to identify a weakest bus in the system 100 by determining a minimum value from the computed VSIs and then by defining a bus having this minimum value as the weakest bus. This minimum value is hereinafter referred to as minimum VSI ($VSI_{min}$). In an alternate embodiment, the computation module 216 (instead of the location identification module 218) may be configured to determine this $VSI_{min}$. Thereafter, in such an embodiment, the location identification module 218 may be configured to define the bus having this $VSI_{min}$ as the weakest bus.

$VSI_{min}$ may not always signify the weakest bus in the system 100 since the $VSI_{min}$ may have a higher value indicating that the bus with $VSI_{min}$ is still a stronger bus in the system 100, even though it may be weaker with respect to other buses in the system 100. In order to handle such scenarios, in some embodiments, the location identification module 218 may be configured to identify weak buses in the system 100 by comparing the computed VSIs with one or more weak bus threshold values (hereinafter referred to as 'weak bus threshold values'). In such embodiments, if this comparison results in any or some of the computed VSIs being less than or equal to the weak bus threshold values, the location identification module 218 may be configured to define the buses having such VSIs as weak buses in the system 100. In some other embodiments, the location identification module 218 may be configured to compare only $VSI_{min}$ (from the computed VSIs) with the weak bus threshold values to identify a weakest bus in the system 100. In such embodiments, if this comparison results in $VSI_{min}$ being less than or equal to the weak bus threshold values, the location identification module 218 may be configured to define the bus having $VSI_{min}$ as the weakest bus in the system 100.

In some embodiments, the weak bus threshold values may be defined or modified by the utility operator (or protection engineer), or dynamically defined and controlled. In one embodiment, each weak bus threshold value may be meant to provide an indicator to the utility operator or the protection engineer. In one exemplary embodiment, one weak bus threshold value (for example, between 0.8 to 0.9 pu) may be meant to provide a warning or an alert to the utility operator that one or more buses with VSIs (or $VSI_{min}$) less than this threshold value may be approaching a voltage stability margin (at or below which the system 100 may collapse). In another exemplary embodiment, another weak bus threshold value (for example, between 0.51 to 0.79 pu) may be meant to provide an emergency indicator to the utility operator that one or more buses with VSIs (or $VSI_{min}$) less than this threshold value may be approaching the voltage stability margin and hence the utility operator may generate a control action to ensure that the VSIs are maintained above this margin. The control action may include, but not limited to, enhancement of reactive power support, load shedding, or system re-configuration.

Further, in some embodiments, the location identification module 218 may be configured to generate a notification message to indicate one or more categories of the weak buses to the utility operator. The 'categories of the weak buses' as used herein are defined based on the type of weak bus threshold values. For example, a bus 'B1' may have a VSI value that may be less than a weak bus threshold value that is meant to provide a warning or an alert but more than a threshold value that is meant to provide an emergency indicator. This bus may be categorized into category 'A' of weak buses. On the other hand, in another example, a bus 'B2' may have a VSI value that may be less than a weak bus threshold value that is meant to provide an emergency indicator. This bus may be categorized into category 'B' of weak buses. In one exemplary embodiment, the notification message may be an audio or a visual indicator to the utility operator that the system 100 is approaching the voltage stability margin.

In some embodiments, the local or remote workstation 214 may be configured to communicate with the location identification module 218 either via the communication network 212 or directly as shown in Fig. 2. In such embodiments, the location identification module 218 may be configured to identify locations of weak buses in the system (such as 100) by generating location information of the weak buses, for example, location identities (IDs) corresponding to the weak buses. The location identification module 218 may be further configured to transmit this location information to the local or remote workstation 214 for notifying the location of the weak buses in the system (such as 100) to the utility operator or protection engineer. In one exemplary embodiment, the utility operator or protection engineer may, for example, view these locations on a display (not shown) provided at the local or remote workstation 214. In some embodiments, the local or remote workstation 214 may be implemented in the system 200 or anywhere in a communication architecture 400 or 500 (for example, within a centralized control center 412 in the communication architecture 400).

Further, in some embodiments, once the weak buses are determined in the system 100, a voltage stability margin of the system 100 may be determined. The processor 206 may include a voltage stability determination module 236 that may be configured to determine voltage instability in the system 100 based on the voltage stability margin (hereinafter referred to as 'bus stability threshold value'). In some embodiments, this threshold value may be same or different from the weak bus threshold value. In one exemplary embodiment, the voltage stability determination module 236 may be configured to compare the determined minimum VSI ($VSI_{min}$) with the bus stability threshold value. In one such embodiment, the voltage stability determination module 236 may be configured to determine voltage instability in the system 100 if the minimum VSI ($VSI_{min}$) is less than or equal to the bus stability threshold value.

In some embodiments, the bus stability threshold value may be determined based on the voltage magnitude ("$V_r$") at the reference bus 'Br.' In one exemplary embodiment, for under-compensated electrical power system, considering maximum power transfer through an electrical power system including 'mth' bus and reference bus 'Br,' the value of '$V_m$*cos($\delta$)' may be equal to '$V_r$/2.' Replacing '$V_m$*cos ($\delta$)' with $VSI_m$ using equation 2, the system 100 may be determined to be unstable if any of the computed VSIs is less than or equal to '$V_r$/2.'

Alternatively, in another exemplary embodiment, the bus stability threshold value may be determined using any other technique. In one example, an electrical operator may define this threshold value for over-compensated electrical power system. In another example, the threshold value may be dynamically derived, for example, from power system quantities such as reactive power.

In another example, where multiple generators are used, a weighted average of voltage magnitudes corresponding to these generators may be used for determining the bus stability threshold value.

In one embodiment, the minimum VSI ($VSI_{min}$) may be same for some buses in the system 100. In such an embodiment, any existing approach may be used to determine voltage instability in the system 100, when some buses have same minimum VSI ($VSI_{min}$). In one exemplary embodiment, when the buses have same minimum VSI ($VSI_{min}$), reactive power support or active power support may be used to determine voltage instability in the system 100.

As described above, in some embodiments, the phasor values may be $\Delta V_m$ (or rate of change of $V_m$) and $\Delta\delta_m$ (or rate of change of $\delta_m$), instead of $V_m$ and $\delta_m$. In one such exemplary embodiment, the following equation may be used to determine VSI at any 'mth' bus (instead of equation 2):

$$VSI_m = \Delta V_m * (\Delta\delta_m - \Delta\delta_r) \quad (eq. \ 3)$$

where,

$\Delta\delta_r$ is a change of reference phase angle at the reference bus 'Br', which is calculated as the difference between a phase angle ('$\delta_{rT1}$') determined at the reference bus 'Br' and at a time instance 'T1,' and a phase angle ('$\delta_{rT2}$') determined at the same reference bus 'Br' and at a time instance 'T2,'

$\Delta V_m$ is a change of voltage magnitude at the 'mth' bus, which is calculated as the difference between voltage magnitude ('$V_{mT1}$') determined at the 'mth' bus and at a time instance 'T1,' and voltage magnitude ('$V_{mT2}$') determined at the 'mth' bus and at a time instance 'T2'

In another embodiment, the VSIs may be computed as a function of $V_m$ and $\Delta\delta_m$ (or rate of change of $\delta_m$). In yet another embodiment, the VSIs may be computed as a function of $\Delta V_m$ (or rate of change of $V_m$) and $\delta_m$. $V_m$ may change due to, for example, switching of reactive power support and hence may not provide desired VSIs if used alone for computation of VSIs. On the other hand $\delta_m$ may change due to load or system changes. As given in equation 3, VSIs me be computed as the product of $\Delta V_m$ and $\Delta\delta$, which may indicate changes in real and reactive loads and system, where $\Delta\delta$ indicates a change of phasor angle ($\delta$), which is calculated as the difference between phasor angle determined at the 'mth' bus and at a time instance 'T1,' and phasor angle determined at the 'mth' bus and at a time instance 'T2.' Moreover, in another embodiment, for over-compensated systems, since voltage magnitudes ($V_m$) are near unity, only $\Delta\delta$ may be used for VSI computation. In such an embodiment, as the system 100 approaches stability, $\Delta\delta$ may increase.

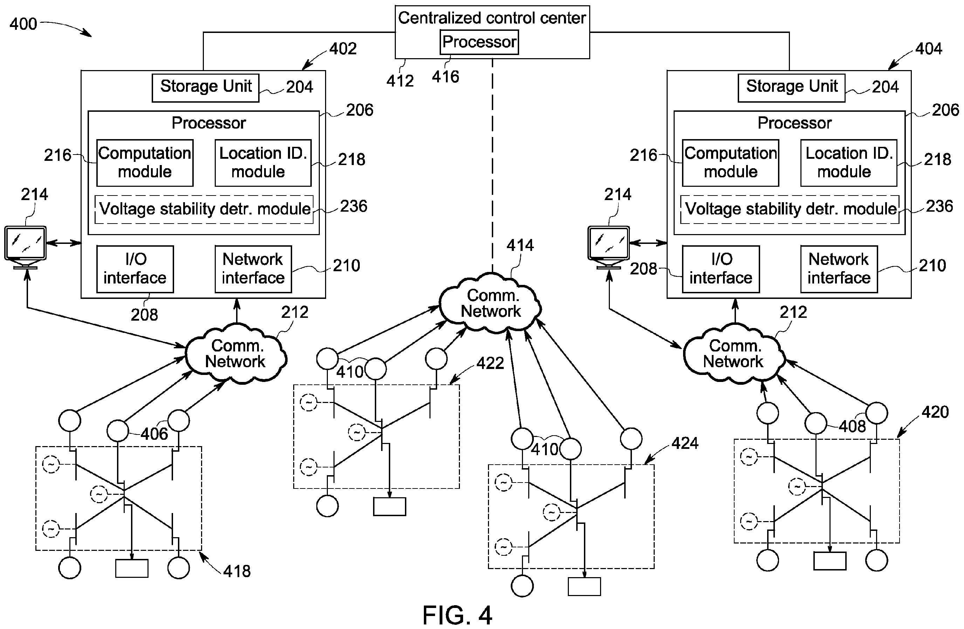

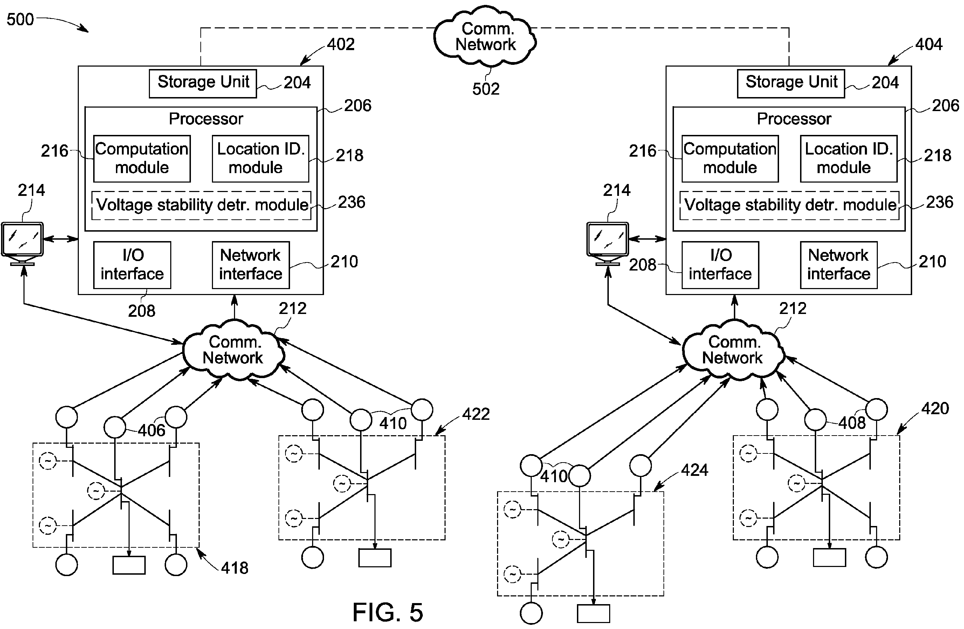

Fig. 2 above considers the embodiment where a single control center system 200 exchanges data directly with the monitoring modules 126. However, in some other embodiments, multiple control center systems may be used without deviating from the scope of the invention. For example, Figs. 4 and 5 depict two different types of communication architectures that include two control center systems communicating with monitoring modules. Fig. 4 depicts a communication architecture 400 including two control center systems 402 and 404 (similar to the system 200) that may communicate with a centralized control center 412, in accordance with one embodiment. In one embodiment, the control center systems 402 and 404 may be connected to the centralized control center 412 via a communication network (not shown) similar to the communication network 212. As shown in Fig. 4, the two control center systems 402 and 404 may also communicate with monitoring modules 406 and 408 (similar to the monitoring modules 126), respectively. In some embodiments, the communication architecture 400 may further include two monitoring modules 410 (also similar to the monitoring modules 126) that may communicate with the centralized control center 412 via a communication network 414 (similar to the communication network 212), thereby bypassing the two control center systems 402 and 404. In one embodiment, the centralized control center 412 may be a super PDC or EMS that may be configured to control and monitor the two control center systems 402 and 404 and the two monitoring modules 410.

In some embodiments, the centralized control center 412 may include a processor 416 similar to the processor 206. In such embodiments, the processor 416 in the centralized control center 412 may be configured to execute some or all the functionalities of the processor 206 in the control center system 402 or 404. In one exemplary embodiment, the VSIs may be computed at the processor 416. In another embodiment, the identification of the weak buses may be performed at the processor 416. In yet another embodiment, some of these functionalities of the processor 206 may be implemented in the monitoring modules 406, 408 or 410.

In one embodiment, the monitoring modules 406, 408 and 410 may be configured to communicate with each other (for example, using the communication network 212 or via any other communication means) in order to exchange maximum or minimum phase angle determined within their respective regions. In some embodiments, the monitoring modules 406 may exchange phase angles, corresponding to respective buses within a first region 418, with each other, and one of these monitoring modules 406 may be configured to determine maximum or minimum value from these exchanged phase angles. This maximum or minimum value is hereinafter referred to as 'first maximum ($\delta_{1max}$) or minimum ($\delta_{1min}$) phase angle.' Similarly, one of the monitoring modules 408 may determine maximum or minimum value from phase angles corresponding to respective buses in a second region 420, and one of the monitoring modules 410 may determine maximum or minimum value from phase angles corresponding to respective buses in a third region 422 or a fourth region 424. The maximum or minimum value in the second region 420 is hereinafter referred to as 'second maximum ($\delta_{2max}$) or minimum ($\delta_{2min}$) phase angle.' Also, the maximum or minimum values in the third and fourth regions 422 and 424 are hereinafter referred to as 'third maximum ($\delta_{3max}$) or minimum ($\delta_{3min}$) phase angle' and 'fourth maximum ($\delta_{4max}$) or minimum ($\delta_{4min}$) phase angle,' respectively.

Therefore, the monitoring modules (406, 408, or 410) may determine respective maximum or minimum phase angles within their monitoring regions. These phase angles may provide information on weak buses in the system 100 with respect to only those buses that are within the respective monitoring regions of the monitoring modules. In order to identify system-wide weak buses and their proximity to critical point (that is, voltage instability condition), a common or unique reference phase angle may be determined for the overall system 100. The common reference phase angle may be a maximum or minimum value obtained by comparing maximum or minimum phase angles, each determined at the respective set of monitoring modules.

In one embodiment, a computation module (either in the processor 206, or in the processor 416, or in a processor (not shown) in one of the monitoring modules 406, 408 and 410) may be configured to exchange these maximum or minimum values of phase angles with each other and then compare these values to determine a unique maximum or minimum value from these exchanged values as the reference phase angle. This maximum or minimum value may then be used as a common 'reference phase angle' for the computation of VSIs for all the buses in the system 100, and determination of weak buses in the system 100. In some embodiments, voltage magnitude ("$V_r$") at a reference bus 'Br,' at which the common 'reference phase angle' is determined, may be then used to determine the bus stability threshold value. As described above, this threshold value may be used to determine voltage instability in the system 100.

The embodiments described above for determining reference phase angle have been with respect to two control center systems 402 and 404. However, those embodiments can be similarly applied for more than two control center systems.

Fig. 4 described above considers presence of the centralized control center 412. However, the control center systems 402 and 404 shown in Fig. 4 may alternatively be connected directly to each other without the need for the centralized control center 412. Fig. 5 depicts a communication architecture 500 including the two control center systems 402 and 404 that may communicate with each other directly, that is, without any centralized control center, in accordance with one embodiment. In one embodiment, the two control center systems 402 and 404 may be inter-connected via a communication network 502 (similar to the communication network 212) or any other communication means. Various embodiments of the communication architecture 400 may be equally applicable for the communication architecture 500, except that the functionalities executed by the centralized control center 412 will be executed by one or both control center systems 402 and 404. Also, as shown in Fig. 5, the two monitoring units 410 in the communication architecture 500 may be configured to communicate with the respective control center systems 402 and 404 via the communication network 212, similar to the other monitoring units 406 and 408. In one exemplary embodiment, the reference phase angle may be determined by the processor 206 in one of the two control center systems 402 and 404 by directly exchanging the maximum or minimum values of phase angles (each determined at the respective control center systems 402 and 404) between the two control center systems 402 and 404 to determine the maximum or minimum value from these two angles. This maximum or minimum value may be then used as a common reference phase angle for the computation of VSIs for all the buses in the system 100, and to determine weak buses in the system 100. In some embodiments, voltage magnitude ("$V_r$") at a reference bus 'Br,' at which the common 'reference phase angle' is determined, may be then used to determine the bus stability threshold value for determining voltage instability in the system 100.

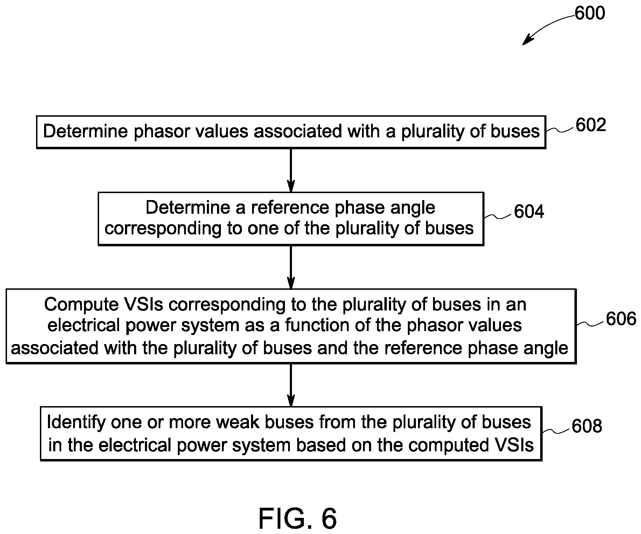

In one embodiment, a method for identification of weak buses is presented. Fig. 6 is a flowchart depicting a method 600 for identification of weak buses from a plurality of buses and determination of voltage instability in an electrical power system (such as 100), in accordance with one embodiment. At step 602, phasor values associated with a plurality of buses may be determined. In one exemplary embodiment, a phasor measurement unit (PMU) or a relay embedding functionalities of PMU may be used to determine these phasor values. In another exemplary embodiment, the phasor values may be obtained from, but not limited to, an energy management system (EMS), a manual input from a utility operator, historical data of the phasor values, or a tool for computing the phasor values, or any combination thereof.

At step 604, a reference phase angle corresponding to one of the plurality of buses may be determined. In one embodiment, the reference phase angle may be one of a phase angle in the phasor values determined at step 602. Various embodiments described above for determining the reference phase angle may be equally applied to the method 600.

At step 606, VSIs corresponding to 'm' buses may be computed in the electrical power system as a function of phasor values at the 'm' buses and the reference phase angle. In one embodiment, the phasor value may include voltage magnitude ($V_m$) and phase angle ($\delta_m$), both corresponding to a respective 'mth' bus. In another embodiment, the phasor value may include a change (or a rate of change) of the voltage magnitude ($\Delta V_m$) and a change (or a rate of change) of the phase angle ($\Delta \delta_m$), both corresponding to the respective 'mth' bus. Various embodiments described above in conjunction with Figs. 1-5 may be equally applied to the method 600 for the computation of VSIs.

Further, at step 608, weak buses may be identified from the plurality of buses in the electrical power system based on the computed VSIs. In one embodiment, the weak buses may be identified by determining a minimum VSI ($VSI_{min}$) from the computed VSIs, and then defining the bus with the minimum VSI ($VSI_{min}$) as the weakest bus. In some embodiments, weak buses in the system may be identified by comparing the computed VSIs with weak bus threshold values. In such embodiments, if this comparison results in any or some of the computed VSIs being less than or equal to the weak bus threshold values, the buses having such VSIs may be defined as weak buses in the system. In some other embodiments, only $VSI_{min}$ (from the computed VSIs) may be compared with the weak bus threshold values to identify a weakest bus in the system 100.

In some embodiments, once the weakest bus is determined in the electrical power system (such as 100), the method 600 may further determine voltage instability in the system based on a bus stability threshold value. In one exemplary embodiment, $VSI_{min}$ may be compared with this threshold value. In such an embodiment, the voltage instability in the system is determined

if $VSI_{min}$ is less than or equal to this threshold value.

Various embodiments described above in conjunction with Figs. 1-5 above may be equally applied to the method 600 for the identification of weak buses and determination of voltage instability in the electrical power system (such as 100).

The systems and methods in accordance with embodiments of the invention may provide determination of weak buses or a weakest bus in an electrical power system (such as 100) in real-time. Embodiments of the system and method disclosed herein may ensure that determining the weaker buses or weakest bus may be used to implement appropriate counter-measures to reduce or eliminate any damage and prevent cascading effects caused due to delay in the detection of voltage instability. Various embodiments disclosed herein may implement counter-measures when the comparison of minimum VSI ($VSI_{min}$) with a bus stability threshold value indicates voltage instability in the system. Various embodiments avoid delay in the detection of voltage instability by using phasor values in combination with reference phase angle to compute VSIs and by determining weakest bus or voltage instability in the system based on these computed VSIs. By using only phasor values and reference phase angle, various embodiments further eliminate the need for any additional information such as current magnitude, connectivity, network parameters, loading condition, changes in controls, outages, and so on for the computation of VSIs and determination of weak buses or voltage instability in the system.

Various embodiments may take the form of an entirely hardware embodiment, an entirely software embodiment, or an embodiment containing both hardware and software components. In accordance with one embodiment, the invention may be implemented in software, which includes but is not limited to firmware, resident software, or microcode.

**Claims**

1. A method, comprising:

   (i) computing voltage stability indices (VSIs) corresponding to a plurality of buses (102, 104, 106, 108, 110, 304, 306) in an electrical power system (100) as a function of phasor values associated with the plurality of buses (102, 104, 106, 108, 110, 304, 306) and a reference phase angle corresponding to one bus of the plurality of buses (102, 104, 106, 108, 110, 304, 306),
   wherein each of the phasor values comprising one of:

      voltage magnitude ($V_m$) corresponding to the respective bus, and phase angle ($\delta_m$) corresponding to the respective bus, or change or a rate of change of the voltage

magnitude ($\Delta V_m$) corresponding to the respective bus, and change or a rate of change of the phase angle ($\Delta \delta_m$) corresponding to the respective bus; and

   wherein the reference phase angle comprises one of
   a maximum phase angle ($\delta_{max}$) or a minimum phase angle ($\delta_{min}$) determined from the phase angles ($\delta_m$) associated with the plurality of buses (102, 104, 106, 108, 110, 304, 306); and
   (ii) identifying one or more weak buses (102, 104, 106, 108, 110, 304, 306) from the plurality of buses (102, 104, 106, 108, 110, 304, 306) in the electrical power system (100) based on the computed VSIs.

2. The method of claim 1, wherein the maximum phase angle ($\delta_{max}$) is determined as the reference phase angle by:

   determining a first maximum phase angle ($\delta_{1max}$) from phase angles ($\delta_{1m}$) within a first region (418) of buses of the plurality of buses (102, 104, 106, 108, 110, 304, 306);
   determining a second maximum phase angle ($\delta_{2max}$) from phase angles ($\delta_{2m}$) within a second region (420) of buses of the plurality of buses (102, 104, 106, 108, 110, 304, 306); and
   comparing the first maximum phase angle ($\delta_{1max}$) and the second maximum phase angle ($\delta_{2max}$) to determine maximum of the first maximum phase angle ($\delta_{1max}$) and the second maximum phase angle ($\delta_{2max}$) as the reference phase angle.

3. The method of claim 1, wherein the minimum phase angle ($\delta_{min}$) is determined as the reference phase angle by:

   determining a first minimum phase angle ($\delta_{1min}$) from phase angles ($\delta_{1m}$) within a first region (418) of buses of the plurality of buses (102, 104, 106, 108, 110, 304, 306);
   determining a second minimum phase angle ($\delta_{2min}$) from phase angles ($\delta_{2m}$) within a second region (420) of buses of the plurality of buses (102, 104, 106, 108, 110, 304, 306); and
   comparing the first minimum phase angle ($\delta_{1min}$) and the second minimum phase angle ($\delta_{2min}$) to determine minimum of the first minimum phase angle ($\delta_{1min}$) and the second minimum phase angle ($\delta_{2min}$) as the reference phase angle.

4. The method of any of claims 1 to 4, further comprising:

   determining a minimum VSI ($VSI_{min}$) corre-

sponding to a respective bus from the computed VSIs; and
defining the bus with the minimum VSI ($VSI_{min}$) as the one or more weak buses (102, 104, 106, 108, 110, 304, 306).

5. The method of claim 4, further comprising:

comparing the minimum VSI ($VSI_{min}$) with a bus stability threshold value; and
determining voltage instability in the electrical power system (100) if the minimum VSI ($VSI_{min}$) is less than or equal to the bus stability threshold value.

6. The method of any preceding claim, further comprising:

comparing one of: the computed VSIs, or a minimum VSI ($VSI_{min}$) from the computed VSIs with one or more weak bus threshold values;
determining one or more VSIs from the computed VSIs, or the minimum VSI ($VSI_{min}$), as less than or equal to the weak bus threshold values based on the comparison; and
defining one or more buses (102, 104, 106, 108, 110, 304, 306), corresponding to one of: the one or more VSIs or the minimum VSI ($VSI_{min}$), as the one or more weak buses.

7. The method of claim 6, further comprising generating a notification message to indicate one or more categories of the one or more weak buses (102, 104, 106, 108, 110, 304, 306).

8. A system (100), comprising:
a computation module (216) configured to compute voltage stability indices (VSIs) corresponding to a plurality of buses (102, 104, 106, 108, 110, 304, 306) in an electrical power system (100) as a function of phasor values associated with the plurality of buses (102, 104, 106, 108, 110, 304, 306) and a reference phase angle corresponding to one bus of the plurality of buses (102, 104, 106, 108, 110, 304, 306), wherein each of the phasor values comprising one of:

voltage magnitude ($V_m$) corresponding to the respective bus, and phase angle ($\delta_m$) corresponding to the respective bus, or
change or a rate of change of the voltage magnitude ($\Delta V_m$) corresponding to the respective bus, and change or a rate of change of the phase angle ($\Delta\delta_m$) corresponding to the respective bus; and

wherein the reference phase angle comprises one of

a maximum phase angle ($\delta_{max}$) or a minimum

phase angle ($\delta_{min}$) determined from the phase angles ($\delta_m$) associated with the plurality of buses (102, 104, 106, 108, 110, 304, 306); and
a location identification module (218) configured to identify one or more weak buses (102, 104, 106, 108, 110, 304, 306) from the plurality of buses (102, 104, 106, 108, 110, 304, 306) in the electrical power system (100) based on the computed VSIs.

9. The system (100) of claim 8, wherein the computation module (216) is further configured to obtain at least one of the phasor values or the reference phase angle using at least one of: one or more phasor measurement units (PMUs) monitoring the plurality of buses (102, 104, 106, 108, 110, 304, 306), an energy management system (EMS), a manual input from a utility operator, historical data of the phasor values, or a tool for computing the phasor values.

10. The system (100) of claim 8 or 9, wherein the computation module (216) is further configured to:

determine a first maximum phase angle ($\delta_{1max}$) from phase angles ($\delta_{1m}$) within a first region (418) of buses of the plurality of buses (102, 104, 106, 108, 110, 304, 306),
determine a second maximum phase angle ($\delta_{2max}$) from phase angles ($\delta_{2m}$) within a second region (420) of buses of the plurality of buses (102, 104, 106, 108, 110, 304, 306), and
compare the first maximum phase angle ($\delta_{1max}$) and the second maximum phase angle ($\delta_{2max}$) to determine maximum of the first maximum phase angle ($\delta_{1max}$) and the second maximum phase angle ($\delta_{2max}$) as the reference phase angle.

11. The system (100) of claim 8 or 9, wherein the computation module (216) is further configured to:

determine a first minimum phase angle ($\delta_{1min}$) from phase angles ($\delta_{1m}$) within a first region (418) of buses of the plurality of buses (102, 104, 106, 108, 110, 304, 306),
determine a second minimum phase angle ($\delta_{2min}$) from phase angles ($\delta_{2m}$) within a second region (420) of buses of the plurality of buses (102, 104, 106, 108, 110, 304, 306), and
compare the first minimum phase angle ($\delta_{1min}$) and the second minimum phase angle ($\delta2_{min}$) to determine minimum of the first minimum phase angle ($\delta_{1min}$) and the second minimum phase angle ($\delta_{2min}$) as the reference phase angle.

12. The system (100) of claim 9, wherein the computation module (216) is further configured to determine

a minimum VSI ($VSI_{min}$) from the computed VSIs.

13. The system (100) of claim 14, wherein the location identification module (218) is configured to define the bus with the minimum VSI ($VSI_{min}$) as the one or more weak buses (102, 104, 106, 108, 110, 304, 306).

**Patentansprüche**

1. Verfahren, umfassend:

   (i) Berechnen von Spannungsstabilitätsindizes (VSIs), entsprechend einer Vielzahl von Bussen (102, 104, 106, 108, 110, 304, 306) in einem elektrischen Stromversorgungssystem (100) als eine Funktion von Phasorwerten, die der Vielzahl von Bussen (102, 104, 106, 108, 110, 304, 306) zugehörig sind, und einem Referenzphasenwinkel entsprechend einem Bus der Vielzahl von Bussen (102, 104, 106, 108, 110, 304, 306),
   wobei jeder der Phasorwerten eine umfasst von:

   Spannungsmagnitude ($V_m$) entsprechend dem jeweiligen Bus und Phasenwinkel ($\delta_m$) entsprechend dem jeweiligen Bus, oder
   Änderung oder eine Änderungsrate der Spannungsmagnitude ($\Delta V_m$) entsprechend dem jeweiligen Bus und Änderung oder eine Änderungsrate des Phasenwinkels ($\Delta \delta_m$) entsprechend dem jeweiligen Bus; und
   wobei der Referenzphasenwinkel einen umfasst von
   einem maximalen Phasenwinkel ($\delta_{max}$) oder einem minimalen Phasenwinkel ($\delta_{min}$), die von den Phasenwinkeln ($\delta_m$) bestimmt werden, die der Vielzahl von Bussen (102, 104, 106, 108, 110, 304, 306) zugehörig sind; und

   (ii) Identifizieren eines oder mehrerer schwacher Busse (102, 104, 106, 108, 110, 304, 306) von der Vielzahl von Bussen (102, 104, 106, 108, 110, 304, 306) im elektrischen Stromversorgungssystem (100), basierend auf den berechneten VSIs.

2. Verfahren nach Anspruch 1, wobei der maximale Phasenwinkel ($\delta_{max}$) als der Referenzphasenwinkel bestimmt wird, durch:

   Bestimmen eines ersten maximalen Phasenwinkels ($\delta_{1max}$) von Phasenwinkeln ($\delta_{1m}$) innerhalb eines ersten Bereichs (418) von Bussen der Vielzahl von Bussen (102, 104, 106, 108, 110, 304, 306);
   Bestimmen eines zweiten maximalen Phasenwinkels ($\delta_{2max}$) von Phasenwinkeln ($\delta_{2m}$) innerhalb eines zweiten Bereichs (420) von Bussen der Vielzahl von Bussen (102, 104, 106, 108, 110, 304, 306); und
   Vergleichen des ersten maximalen Phasenwinkels ($\delta_{1max}$) und des zweiten maximalen Phasenwinkels ($\delta_{2max}$), um ein Maximum des ersten maximalen Phasenwinkels ($\delta_{1max}$) und des zweiten maximalen Phasenwinkels ($\delta_{2max}$) als den Referenzphasenwinkel zu bestimmen.

3. Verfahren nach Anspruch 1, wobei der minimale Phasenwinkel ($\delta_{min}$) als der Referenzphasenwinkel bestimmt wird, durch:

   Bestimmen eines ersten minimalen Phasenwinkels ($\delta_{1min}$) von Phasenwinkeln ($\delta_{1m}$) innerhalb eines ersten Bereichs (418) von Bussen der Vielzahl von Bussen (102, 104, 106, 108, 110, 304, 306);
   Bestimmen eines zweiten minimalen Phasenwinkels ($\delta_{2min}$) von Phasenwinkeln ($\delta_{2m}$) innerhalb eines zweiten Bereichs (420) von Bussen der Vielzahl von Bussen (102, 104, 106, 108, 110, 304, 306); und
   Vergleichen des ersten minimalen Phasenwinkels ($\delta_{1min}$) und des zweiten minimalen Phasenwinkels ($\delta_{2min}$), um ein Minimum des ersten minimalen Phasenwinkels ($\delta_{1min}$) und des zweiten minimalen Phasenwinkels ($\delta_{2min}$) als den Referenzphasenwinkel zu bestimmen.

4. Verfahren nach einem der Ansprüche 1 bis 4, weiter umfassend:

   Bestimmen eines minimalen VSI ($VSI_{min}$) entsprechend einem jeweiligen Bus von den berechneten VSIs; und
   Definieren des Busses mit dem minimalen VSI ($VSI_{min}$) als den einen oder die mehreren schwachen Busse (102, 104, 106, 108, 110, 304, 306).

5. Verfahren nach Anspruch 4, weiter umfassend:

   Vergleichen des minimalen VSI ($VSI_{min}$) mit einem Busstabilitätsschwellenwert; und
   Bestimmen von Spannungsinstabilität im elektrischen Stromversorgungssystem (100), falls der minimale VSI ($VSI_{min}$) kleiner oder gleich dem Busstabilitätsschwellenwert ist.

6. Verfahren nach einem der vorstehenden Ansprüche, weiter umfassend:

   Vergleichen eines von: den berechneten VSIs oder eines minimalen VSI ($VSI_{min}$) von den berechneten VSIs mit einem oder mehreren schwachen Busschwellenwerten;

Bestimmen eines oder mehrerer VSIs von den berechneten VSIs oder des minimalen VSI ($VSI_{min}$) als weniger als oder gleich den schwachen Busschwellenwerten, basierend auf dem Vergleich; und

Definieren eines oder mehrerer Busse (102, 104, 106, 108, 110, 304, 306), entsprechend einem von: dem einen oder den mehreren VSIs oder dem minimalen VSI ($VSI_{min}$) als den einen oder die mehreren schwachen Busse.

7. Verfahren nach Anspruch 6, weiter umfassend Erzeugen einer Benachrichtigungsnachricht, um eine oder mehrere Kategorien des einen oder der mehreren schwachen Busse (102, 104, 106, 108, 110, 304, 306) anzuzeigen.

8. System (100), umfassend:
ein Berechnungsmodul (216), das konfiguriert ist, Spannungsstabilitätsindizes (VSIs) entsprechend einer Vielzahl von Bussen (102, 104, 106, 108, 110, 304, 306) in einem elektrischen Stromversorgungssystem (100) als eine Funktion von Phasorwerten, die der Vielzahl von Bussen (102, 104, 106, 108, 110, 304, 306) zugehörig sind, und einem Referenzphasenwinkel entsprechend einem Bus der Vielzahl von Bussen (102, 104, 106, 108, 110, 304, 306) zu berechnen, wobei jeder der Phasorwerte eine umfasst von:

Spannungsmagnitude ($V_m$) entsprechend dem jeweiligen Bus und Phasenwinkel ($\delta_m$) entsprechend dem jeweiligen Bus, oder

Änderung oder eine Änderungsrate der Spannungsmagnitude ($\Delta V_m$) entsprechend dem jeweiligen Bus und Änderung oder eine Änderungsrate des Phasenwinkels ($\Delta\delta_m$) entsprechend dem jeweiligen Bus; und

wobei der Referenzphasenwinkel eines umfasst von

einem maximalen Phasenwinkel ($\delta_{max}$) oder einem minimalen Phasenwinkel ($\delta_{min}$), die von den Phasenwinkeln ($\delta_m$) bestimmt sind, die der Vielzahl von Bussen (102, 104, 106, 108, 110, 304, 306) zugehörig sind; und

ein Standortidentifizierungsmodul (218), das konfiguriert ist, einen oder mehrere schwache Busse (102, 104, 106, 108, 110, 304, 306) von der Vielzahl von Bussen (102, 104, 106, 108, 110, 304, 306) im elektrischen Stromversorgungssystem (100) basierend auf den berechneten VSIs zu identifizieren.

9. System (100) nach Anspruch 8, wobei das Berechnungsmodul (216) weiter konfiguriert ist, mindestens einen der Phasorwerte oder des Referenzphasenwinkels unter Verwendung von mindestens einem zu erhalten von: einer oder mehreren Phasormessungseinheiten (PMUs), die die Vielzahl von Bussen (102, 104, 106, 108, 110, 304, 306) überwachen, einem Energieverwaltungssystem (EMS), einem manuellen Eingang von einem Einrichtungsbetreiber, älteren Daten der Phasorwerte oder einem Werkzeug zum Berechnen der Phasorwerte.

10. System (100) nach Anspruch 8 oder 9, wobei das Berechnungsmodul (216) weiter konfiguriert ist zum:

Bestimmen eines ersten maximalen Phasenwinkels ($\delta_{1max}$) von Phasenwinkeln ($\delta_{1m}$) innerhalb eines ersten Bereichs (418) von Bussen der Vielzahl von Bussen (102, 104, 106, 108, 110, 304, 306),

Bestimmen eines zweiten maximalen Phasenwinkels ($\delta_{2max}$) von Phasenwinkeln ($\delta_{2m}$) innerhalb eines zweiten Bereichs (420) von Bussen der Vielzahl von Bussen (102, 104, 106, 108, 110, 304, 306), und

Vergleichen des ersten maximalen Phasenwinkels ($\delta_{1max}$) und des zweiten maximalen Phasenwinkels ($\delta_{2max}$), um ein Maximum des ersten maximalen Phasenwinkels ($\delta_{1max}$) und des zweiten maximalen Phasenwinkels ($\delta_{2max}$) als den Referenzphasenwinkel zu bestimmen.

11. System (100) nach Anspruch 8 oder 9, wobei das Berechnungsmodul (216) weiter konfiguriert ist zum:

Bestimmen eines ersten minimalen Phasenwinkels ($\delta_{1min}$) von Phasenwinkeln ($\delta_{1m}$) innerhalb eines ersten Bereichs (418) von Bussen der Vielzahl von Bussen (102, 104, 106, 108, 110, 304, 306),

Bestimmen eines zweiten minimalen Phasenwinkels ($\delta_{2min}$) von Phasenwinkeln ($\delta_{2m}$) innerhalb eines zweiten Bereichs (420) von Bussen der Vielzahl von Bussen (102, 104, 106, 108, 110, 304, 306), und

Vergleichen des ersten minimalen Phasenwinkels ($\delta_{1min}$) und des zweiten minimalen Phasenwinkels ($\delta_{2min}$), um ein Minimum des ersten minimalen Phasenwinkels ($\delta_{1min}$) und des zweiten minimalen Phasenwinkels ($\delta_{2min}$) als den Referenzphasenwinkel zu bestimmen.

12. System (100) nach Anspruch 9, wobei das Berechnungsmodul (216) weiter konfiguriert ist, einen minimalen VSI ($VSI_{min}$) von den berechneten VSIs zu bestimmen.

13. System (100) nach Anspruch 12, wobei das Standortidentifizierungsmodul (218) konfiguriert ist, den Bus mit dem minimalen VSI ($VSI_{min}$) als den einen

oder die mehreren schwachen Busse (102, 104, 106, 108, 110, 304, 306) zu definieren.

**Revendications**

1. Procédé, comprenant :

(i) le calcul d'indices de stabilité de tension (VSIs) correspondant à une pluralité de bus (102, 104, 106, 108, 110, 304, 306) dans un système d'alimentation électrique (100) en fonction de valeurs de phaseur associées à la pluralité de bus (102, 104, 106, 108, 110, 304, 306) et d'un angle de phase de référence correspondant à un bus de la pluralité de bus (102, 104, 106, 108, 110, 304, 306),
dans lequel chacune des valeurs de phaseur comprend l'un parmi :

une amplitude de tension ($V_m$) correspondant au bus respectif, et un angle de phase ($\delta_m$) correspondant au bus respectif, ou
un changement ou un taux de changement de l'amplitude de tension ($\Delta V_m$) correspondant au bus respectif, et un changement ou un taux de changement de l'angle de phase ($\Delta \delta_m$) correspondant au bus respectif ; et
dans lequel l'angle de phase de référence comprend l'un parmi
un angle de phase maximal ($\delta_{max}$) ou un angle de phase minimal ($\delta_{min}$) déterminé à partir des angles de phase ($\delta_m$) associés à la pluralité de bus (102, 104, 106, 108, 110, 304, 306) ; et

(ii) l'identification d'un ou de plusieurs bus faibles (102, 104, 106, 108, 110, 304, 306) parmi la pluralité de bus (102, 104, 106, 108, 110, 304, 306) dans le système d'alimentation électrique (100) sur la base des VSIs calculés.

2. Procédé selon la revendication 1, dans lequel l'angle de phase maximal ($\delta_{max}$) est déterminé comme étant l'angle de phase de référence par :

la détermination d'un premier angle de phase maximal ($\delta_{1max}$) à partir d'angles de phase ($\delta_{1m}$) dans une première région (418) de bus de la pluralité de bus (102, 104, 106, 108, 110, 304, 306);
la détermination d'un second angle de phase maximal ($\delta_{2max}$) à partir d'angles de phase ($\delta_{2m}$) dans une seconde région (420) de bus de la pluralité de bus (102, 104, 106, 108, 110, 304, 306); et
la comparaison du premier angle de phase maximal ($\delta_{1max}$) et du second angle de phase maximal ($\delta_{2max}$) pour déterminer le maximum du premier angle de phase maximal ($\delta_{1max}$) et du second angle de phase maximal ($\delta_{2max}$) comme étant l'angle de phase de référence.

3. Procédé selon la revendication 1, dans lequel l'angle de phase minimal ($\delta_{min}$) est déterminé comme étant l'angle de phase de référence par :

la détermination d'un premier angle de phase minimal ($\delta_{1min}$) à partir d'angles de phase ($\delta_{1m}$) dans une première région (418) de bus de la pluralité de bus (102, 104, 106, 108, 110, 304, 306);
la détermination d'un second angle de phase minimal ($\delta_{2min}$) à partir d'angles de phase ($\delta_{2m}$) dans une seconde région (420) de bus de la pluralité de bus (102, 104, 106, 108, 110, 304, 306); et
la comparaison du premier angle de phase minimal ($\delta_{1min}$) et du second angle de phase minimal ($\delta_{2min}$) pour déterminer le minimum du premier angle de phase minimal ($\delta_{1min}$) et du second angle de phase minimal ($\delta_{2min}$) comme étant l'angle de phase de référence.

4. Procédé selon l'une quelconque des revendications 1 à 4, comprenant en outre :

la détermination d'un VSI minimal ($VSI_{min}$) correspondant à un bus respectif à partir des VSIs calculés ; et
la définition du bus ayant le VSI minimal ($VSI_{min}$) comme étant les un ou plusieurs bus faibles (102, 104, 106, 108, 110, 304, 306).

5. Procédé selon la revendication 4, comprenant en outre :

la comparaison du VSI minimal ($VSI_{min}$) à une valeur seuil de stabilité de bus; et
la détermination de l'instabilité de tension dans le système d'alimentation électrique (100) si le VSI minimal ($VSI_{min}$) est inférieur ou égal à la valeur seuil de stabilité du bus.

6. Procédé selon l'une quelconque des revendications précédentes, comprenant en outre :

la comparaison de l'un parmi : les VSIs calculés, ou un VSI minimal ($VSI_{min}$) provenant des VSIs calculés à une ou plusieurs valeurs seuils de bus faible ;
la détermination d'un ou de plusieurs VSIs provenant des VSIs calculés, ou du VSI minimal ($VSI_{min}$), comme étant inférieurs ou égaux aux valeurs seuils de bus faible sur la base de la comparaison ; et

la définition d'un ou de plusieurs bus (102, 104, 106, 108, 110, 304, 306), correspondant à l'un parmi : les un ou plusieurs VSIs ou le VSI minimal ($VSI_{min}$), comme étant les un ou plusieurs bus faibles.

7. Procédé selon la revendication 6, comprenant en outre la génération d'un message de notification pour indiquer une ou plusieurs catégories des un ou plusieurs bus faibles (102, 104, 106, 108, 110, 304, 306).

8. Système (100), comprenant :
un module de calcul (216) configuré pour calculer des indices de stabilité de tension (VSIs) correspondant à une pluralité de bus (102, 104, 106, 108, 110, 304, 306) dans un système d'alimentation électrique (100) en fonction en fonction de valeurs de phaseur associées à la pluralité de bus (102, 104, 106, 108, 110, 304, 306) et d'un angle de phase de référence correspondant à un bus de la pluralité de bus (102, 104, 106, 108, 110, 304, 306), dans lequel chacune des valeurs de phaseur comprend l'un parmi :

une amplitude de tension ($V_m$) correspondant au bus respectif, et un angle de phase ($\delta_m$) correspondant au bus respectif, ou
un changement ou un taux de changement de l'amplitude de tension ($\Delta V_m$) correspondant au bus respectif, et un changement ou un taux de changement de l'angle de phase ($\Delta \delta_m$) correspondant au bus respectif ; et
dans lequel l'angle de phase de référence comprend l'un parmi
un angle de phase maximal ($\delta_{max}$) ou un angle de phase minimal ($\delta_{min}$) déterminé à partir des angles de phase ($\delta_m$) associés à la pluralité de bus (102, 104, 106, 108, 110, 304, 306) ; et
un module d'identification de localisation (218) configuré pour identifier un ou plusieurs bus faibles (102, 104, 106, 108, 110, 304, 306) parmi la pluralité de bus (102, 104, 106, 108, 110, 304, 306) dans le système d'alimentation électrique (100) sur la base des VSIs calculés.

9. Système (100) selon la revendication 8, dans lequel le module de calcul (216) est configuré en outre pour obtenir au moins l'un parmi les valeurs de phaseur ou l'angle de phase de référence en utilisant au moins l'un parmi : une ou plusieurs unités de mesure de phaseur (PMUs) surveillant le pluralité de bus (102, 104, 106, 108, 110, 304, 306), un système de gestion d'énergie (EMS), une entrée manuelle provenant d'un opérateur de service, des données historiques des valeurs de phaseur, ou un outil de calcul des valeurs de phaseur.

10. Système (100) selon la revendication 8 ou 9, dans lequel le module de calcul (216) est configuré en outre pour :

déterminer un premier angle de phase maximal ($\delta_{1max}$) à partir d'angles de phase ($\delta_{1m}$) dans une première région (418) de bus de la pluralité de bus (102, 104, 106, 108, 110, 304, 306) ;
déterminer un second angle de phase maximal ($\delta_{2max}$) à partir d'angles de phase ($\delta_{2m}$) dans une seconde région (420) de bus de la pluralité de bus (102, 104, 106, 108, 110, 304, 306); et
comparer le premier angle de phase maximal ($\delta_{1max}$) et le second angle de phase maximal ($\delta_{2max}$) pour déterminer le maximum du premier angle de phase maximal ($\delta_{1max}$) et du second angle de phase maximal ($\delta_{2max}$) comme étant l'angle de phase de référence.

11. Système (100) selon la revendication 8 ou 9, dans lequel le module de calcul (216) est configuré en outre pour :

déterminer un premier angle de phase minimal ($\delta_{1min}$) à partir d'angles de phase ($\delta_{1m}$) dans une première région (418) de bus de la pluralité de bus (102, 104, 106, 108, 110, 304, 306);
déterminer un second angle de phase minimal ($\delta_{2min}$) à partir d'angles de phase ($\delta_{2m}$) dans une seconde région (420) de bus de la pluralité de bus (102, 104, 106, 108, 110, 304, 306); et
comparer le premier angle de phase minimal ($\delta_{1min}$) et le second angle de phase minimal ($\delta_{2min}$) pour déterminer le minimum du premier angle de phase minimal ($\delta_{1min}$) et du second angle de phase minimal ($\delta_{2min}$) comme étant l'angle de phase de référence.

12. Système (100) selon la revendication 9, dans lequel le module de calcul (216) est configuré en outre pour déterminer un VSI minimal ($VSI_{min}$) à partir des VSIs calculés.

13. Système (100) selon la revendication 12, dans lequel le module d'identification de localisation (218) est configuré pour définir le bus ayant le VSI minimal ($VSI_{min}$) comme étant les un ou plusieurs bus faibles (102, 104, 106, 108, 110, 304, 306).

FIG. 1

FIG. 2

FIG. 3

FIG. 4

EP 2 787 356 B1

FIG. 5

EP 2 787 356 B1

600

Determine phasor values associated with a plurality of buses ⟞ 602

Determine a reference phase angle
corresponding to one of the plurality of buses ⟞ 604

Compute VSIs corresponding to the plurality of buses in an
electrical power system as a function of the phasor values
associated with the plurality of buses and the reference phase angle ⟞ 606

Identify one or more weak buses from the plurality of buses
in the electrical power system based on the computed VSIs ⟞ 608

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090027067 A